(19) Europäisches Patentamt / European Patent Office / Office européen des brevets

(11) **EP 2 598 834 B1**

(12) **FASCICULE DE BREVET EUROPEEN**

(45) Date de publication et mention de la délivrance du brevet:
**18.03.2020 Bulletin 2020/12**

(21) Numéro de dépôt: **11738699.5**

(22) Date de dépôt: **27.07.2011**

(51) Int Cl.:
*G01B 9/02* (2006.01)

(86) Numéro de dépôt international:
**PCT/EP2011/062890**

(87) Numéro de publication internationale:
**WO 2012/013698 (02.02.2012 Gazette 2012/05)**

(54) **DISPOSITIF INTERFEROMETRIQUE A FIBRE OPTIQUE EXTRINSEQUE POUR LA MESURE D'UN PARAMETRE PHYSIQUE**

INTERFEROMETRISCHER FASEROPTISCHER SENSOR ZUM MESSEN EINES PHYSIKALISCHEN PARAMETERS

EXTRINSIC INTERFEROMETRIC FIBER OPTIC SENSOR FOR MEASURING A PHYSICAL PARAMETER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.07.2010 FR 1056230**

(43) Date de publication de la demande:
**05.06.2013 Bulletin 2013/23**

(73) Titulaire: **Institut National Polytechnique de Toulouse**
**31029 Toulouse Cedex 4 (FR)**

(72) Inventeurs:
• **CATTOEN, Michel**
  **31400 Toulouse (FR)**
• **SEAT, Han Cheng**
  **F-31100 Toulouse (FR)**

(74) Mandataire: **Ipside**
  **6, Impasse Michel Labrousse**
  **31100 Toulouse (FR)**

(56) Documents cités:
EP-A1- 0 144 510      WO-A2-2010/030884
US-A- 5 301 001      US-A1- 2007 247 632

• HAN CHENG SEAT ET AL: "An Extrinsic Fiber Fabry-Perot Interferometer for Dynamic Displacement Measurement", MECHATRONICS AND AUTOMATION, 2007. ICMA 2007. INTERNATIONAL CONFERENCE ON, IEEE, PI, 1 août 2007 (2007-08-01), pages 3025-3030, XP031135238, ISBN: 978-1-4244-0827-6
• ARAYA A ET AL: "ABSOLUTE-LENGTH DETERMINATION OF A LONG-BASELINE FABRY-PEROT CAVITY BY MEANS OF RESONATING MODULATION SIDEBANDS", APPLIED OPTICS, OPTICAL SOCIETY OF AMERICA, WASHINGTON, DC; US, vol. 38, no. 13, 1 May 1999 (1999-05-01), pages 2848-2856, XP000830118, ISSN: 0003-6935, DOI: 10.1364/AO.38.002848

**Description**

La présente invention est relative au domaine des dispositifs optoélectroniques à fibre optique. Plus particulièrement, l'invention concerne un dispositif interférométrique à fibre optique, de type Fabry-Pérot extrinsèque, pour la mesure de paramètres physiques, tels que le déplacement d'une cible.

Les dispositifs interférométriques à fibres optiques ont de nombreuses applications, et peuvent être utilisés pour la mesure, par exemple, de température, de contrainte, de pression, ou encore de vibration.

Les dispositifs interférométriques à fibre optique peuvent être classés en deux catégories :

- les dispositifs interférométriques intrinsèques dans lesquels la fibre optique est le transducteur et est employée pour quantifier la grandeur physique recherchée,
- les dispositifs interférométriques extrinsèques dans lesquels la fibre optique utilisée n'est pas le transducteur et ne joue le rôle que de support pour la transmission d'un faisceau lumineux d'un point à un autre. Ce type de dispositif permet ainsi de déporter les composants optoélectroniques hors de la zone de mesure.

Parmi les dispositifs interférométriques extrinsèques existants, on peut citer le dispositif interférométrique Fabry-Pérot extrinsèque à fibre optique, dénommé dispositif EFPI, qui est basé sur la combinaison de deux faisceaux lumineux et qui peut être approximé comme un interféromètre à deux faisceaux. Au contraire des interféromètres du type Mach-Zehnder ou Michelson, un interféromètre Fabry-Pérot permet de s'affranchir des perturbations externes sur la fibre dite de mesure.

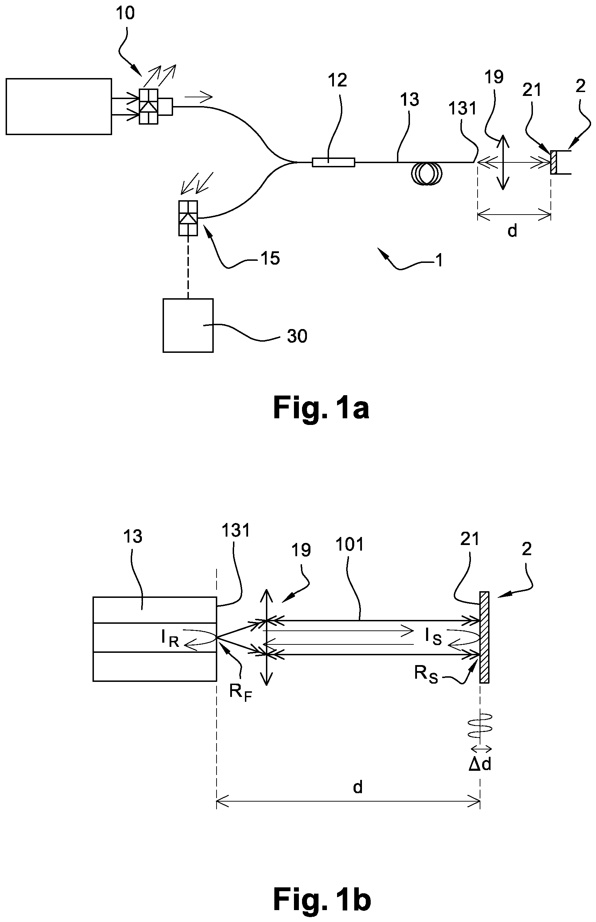

Un dispositif EFPI typique comporte, comme illustré sur la figure 1a, une source lumineuse 10, généralement une source lumineuse laser de type diode laser, un coupleur 12, une fibre optique 13, de préférence monomode, un collimateur 19, une cible réfléchissante 2, la cavité optique de mesure Fabry-Pérot étant formée par la cible 2 et une extrémité 131 de la fibre optique opposée à l'extrémité en regard de la source lumineuse, un photo-détecteur 15 pour la détection d'un signal optique interférométrique et des moyens de traitement 30 dudit signal interférométrique.

La cavité Fabry-Pérot est plus particulièrement illustrée par la figure agrandie 1b.

Lorsque l'on cherche par exemple à mesurer un déplacement de la cible, le principe de fonctionnement du dispositif EFPI est le suivant :

La source lumineuse 10 émet un faisceau lumineux quasi-monochromatique, à puissance constante, en direction de la cible 2 via la fibre optique 13. Lorsque le faisceau lumineux arrive à l'extrémité 131 de la fibre optique, à une interface fibre-air, lorsque l'air est le milieu dans lequel est située la cible 2, une portion du faisceau, dite faisceau de référence, est réfléchie à ladite interface fibre-air, représentée sur la figure 1b par un coefficient de réflexion $R_F$, avec une intensité optique $I_R$, appelée ici intensité de référence. Le faisceau lumineux non réfléchi, dit faisceau de mesure 101, est transmis et se propage dans la cavité optique Fabry-Pérot jusqu'à la cible réfléchissante 2, située à une distance $d$ de l'interface fibre-air, et présentant un coefficient de réflexion $R_s$. Le faisceau de mesure 101 est réfléchi par la cible et réinjecté dans la fibre optique 13 avec une intensité optique $I_s$ appelée ici intensité de mesure.

Lorsque la cible 2 se déplace, les faisceaux de référence et de mesure interfèrent, créant un signal sinusoïdal ou une série de franges interférométriques avec une intensité optique donnée par la formule suivante :

$$I = I_R + I_S + 2\sqrt{I_R I_S}\cos(\theta) \qquad (1)$$

où $\theta$ est le déphasage entre l'intensité de référence $I_R$ et l'intensité de mesure $I_s$.

Pour un trajet optique aller-retour dans la cavité Fabry-Pérot, le déphasage $\theta$ peut être calculé par :

$$\theta = \frac{4\pi n}{\lambda}d \qquad (2)$$

où $n$ est l'indice de réfraction du milieu de la cavité optique ($n \approx 1$ pour l'air) et $\lambda$ est la longueur d'onde de la source lumineuse 10.

La mesure du déphasage $\theta$ devrait permettre de déterminer la distance $d$ de la cible. Or le déphasage $\theta$, d'après la formule cosinusoïdale (1), ne peut être déterminé que modulo $\pi$. Il n'est donc pas possible de déterminer la distance absolue $d$, mais uniquement des variations de distance, ou déplacement $\Delta d$, de la cible. De plus, il n'est pas possible de déterminer le sens de ce déplacement, à savoir si la cible se déplace vers l'extrémité de la fibre optique ou s'en éloigne.

Le photo-détecteur 15 détecte la variation d'intensité optique $I$ engendrée par l'interférence desdits faisceaux (de référence et de mesure) lorsque la cible se déplace et la convertit en un signal électrique, par exemple de tension, comportant des franges d'interférence qui sont fonction du déplacement de la cible.

Le signal interférométrique mesuré par le photo-détecteur peut être exprimé par la formule suivante :

$$V = V_0 + V_m \cos(\theta) \qquad (3)$$

où $V$ est la tension du signal interférométrique converti, $V_0$ est la composante continue et $V_m$ est la composante alternative.

Des moyens de traitement 30 adaptés permettent de déterminer le déphasage $\theta$ à partir de la relation précédente (3) par la mesure du signal $V$ et par identification des paramètres $V_0$ et $V_m$ :

$$V_0 = \frac{V_{\max} + V_{\min}}{2}$$
$$V_m = \frac{V_{\max} - V_{\min}}{2} \qquad (4)$$

où $V_{max}$, $V_{min}$ sont respectivement les amplitudes maximale et minimale du signal $V$.

Pour lever l'ambiguïté de sens du déplacement de la cible, de nombreuses techniques, basées sur le principe de démodulation de deux signaux et connues de l'homme du métier, peuvent être employées. Ces techniques, dites de quadrature, ont recours à l'utilisation par exemple de deux sources lumineuses de longueurs d'ondes différentes, ou de la polarisation de la lumière.

Généralement, ces techniques de quadrature conduisent à l'obtention de deux signaux dits $V_x$ et $V_y$ calculés pour se retrouver en quadrature de phase et s'écrivant sous la forme :

$$V_x = V_{0x} + V_{mx} \cos(\theta) \qquad (5a)$$

$$V_y = V_{0y} + V_{my} \sin(\theta) \qquad (5b)$$

où $V_x$ est la tension d'un premier signal, $V_{0x}$ est la composante continue du premier signal, $V_{mx}$ est la composante alternative du premier signal, $V_y$ est la tension d'un second signal, $V_{0y}$ est la composante continue du second signal et $V_{my}$ est la composante alternative du second signal.

L'identification des quatre paramètres $V_{0x}$, $V_{0y}$, $V_{mx}$ et $V_{my}$ dans les deux relations (5a) et (5b) ainsi que la mesure des signaux $V_x$ et $V_y$ permettent d'obtenir le déphasage $\theta$ modulo $2\pi$ et ainsi de lever l'ambiguïté de sens.

Pour déterminer ces quatre paramètres $V_{0x}$, $V_{0y}$, $V_{mx}$ et $V_{my}$, une méthode connue est basée sur la mesure des minima et maxima des signaux électriques $V_x$ et $V_y$. Les quatre paramètres sont ainsi calculés à partir des formules suivantes :

$$V_{0x} = \frac{V_{x\_\max} + V_{x\_\min}}{2} \qquad (6a)$$

$$V_{0y} = \frac{V_{y\_\max} + V_{y\_\min}}{2} \qquad (6b)$$

$$V_{mx} = \frac{V_{x\_\max} - V_{x\_\min}}{2} \qquad (6c)$$

$$V_{my} = \frac{V_{y\_\max} - V_{y\_\min}}{2} \qquad (6d)$$

où $V_{x\_max}$, $V_{x\_min}$, respectivement $V_{y\_max}$, $V_{y\_min}$, sont les amplitudes maximales et minimales du signal électrique $V_x$, respectivement $V_y$.

Les techniques de quadrature existantes permettent avantageusement de déterminer le sens du déplacement de la cible mais présentent une limitation importante : elles ne fonctionnent qu'en présence d'au moins une frange d'interférence complète. Cette limitation se traduit en termes de déplacements de la cible par des déplacements avec des amplitudes supérieures à la demi-longueur d'onde de la source lumineuse. Par conséquent, pour des amplitudes de déplacements de la cible inférieures à la demi-longueur d'onde de la source lumineuse, il est impossible de déterminer le déplacement de la cible ainsi que son sens de déplacement.

De plus, ces techniques de quadrature présentent l'inconvénient de nécessiter l'ajout dans le dispositif interférométrique de composants optiques, ce qui engendre des coûts supplémentaires non négligeables et qui complexifie la réalisation du dispositif interférométrique.

Un but de l'invention est donc de proposer un dispositif permettant de déterminer un paramètre physique et son sens, même lorsque ce paramètre physique présente une amplitude de variation inférieure à la demi-longueur d'onde de la source lumineuse.

A cet effet, la présente invention a pour objet un dispositif à fibre optique extrinsèque pour la mesure d'un paramètre physique selon la revendication 1, le dispositif comportant:

- une source lumineuse, de longueur d'onde centrale λ pour générer un faisceau lumineux en direction d'une cible,
- une fibre optique pour transporter et guider le faisceau lumineux, dite fibre de mesure, vers une cible,
- un moyen de détection d'un signal interférométrique, ledit signal interférométrique comportant l'information sur le paramètre physique à déterminer,
- des moyens de modulation d'un signal émis par la source lumineuse,
- des moyens de calcul du paramètre physique à partir du signal interférométrique mesuré par le moyen de détection.

Une extrémité de la fibre de mesure, dite extrémité libre, est placée en regard de la cible et forme avec ladite cible une cavité, dite cavité Fabry-Pérot.

Le faisceau lumineux, issu de la source lumineuse, parcourt, dans la cavité Fabry-Pérot, un trajet optique dont la variation est fonction du paramètre physique à déterminer.

Le trajet optique est défini comme une distance géométrique parcourue par le faisceau lumineux rapportée aux propriétés réfringentes du milieu que traverse le faisceau lumineux, c'est à dire en multipliant cette distance géométrique par l'indice de réfraction du milieu. Dans un exemple où le milieu est l'air, le trajet optique correspond donc à la distance aller-retour entre l'extrémité libre de la fibre de mesure et la cible.

Le paramètre physique à déterminer, modifiant le trajet optique du faisceau dans la cavité Fabry-Pérot est par exemple une variation d'indice de réfraction du milieu dans lequel se trouve la cible, et préférentiellement un déplacement de la cible en mouvement.

Selon l'invention, pour déterminer le paramètre physique, la source lumineuse émet un signal modulé en longueur d'onde. Pour provoquer une modulation en longueur d'onde, on agit sur l'amplitude du courant de la source lumineuse. En effet, pour une température donnée, la longueur d'onde de la source lumineuse est sensiblement proportionnelle au courant de la source lumineuse. Cependant, la modulation du signal en courant de la source lumineuse s'accompagne d'une variation de la puissance de ladite source lumineuse, qui entraîne une variation de l'amplitude du courant détectée par le moyen de détection, variation parasite dont il faudra s'affranchir par des moyens appropriés.

Ce signal modulé comporte une composante continue et une composante alternative, ladite composante alternative comportant une double modulation en fréquence, équivalente à une double modulation en longueur d'onde, générée par les moyens de modulation.

La double modulation de la composante alternative du signal modulé émis par la source lumineuse consiste en :

- une première modulation haute fréquence et faible amplitude de modulation du courant de la source lumineuse,
- une deuxième modulation basse fréquence, forte amplitude de modulation du courant de la source lumineuse.

Cette double modulation va permettre de mesurer le paramètre physique et son sens, quelque soit son amplitude de variation.

En effet, pour reconstituer le paramètre physique et son sens par démodulation, il faut obtenir les paramètres $V_{x\_max}$, $V_{x\_min}$, $V_{y\_max}$, $V_{y\_min}$.

Dans le cas dit général, où l'amplitude de variation du paramètre physique est supérieure à la demi-longueur d'onde de la source lumineuse, la première modulation (haute fréquence) est en soi suffisante car le signal interférométrique détecté par le moyen de détection comporte au moins une frange d'interférence complète. Les paramètres $V_{x\_max}$, $V_{x\_min}$, $V_{y\_max}$, $V_{y\_min}$ sont mesurables directement et il est ainsi possible de reconstituer le déplacement de la cible et son sens.

Dans le cas dit particulier, où l'amplitude de variation du paramètre physique est inférieure à la demi-longueur d'onde de la source lumineuse, le signal interférométrique détecté par le moyen de détection ne comporte pas une frange d'interférence complète. Les paramètres $V_{x\_max}$, $V_{x\_min}$, $V_{y\_max}$, $V_{y\_min}$ ne sont pas mesurables directement. La deuxième modulation (basse fréquence) du signal modulé va permettre de créer au moins une frange d'interférence complète artificielle pour obtenir les paramètres $V_{x\_max}$, $V_{x\_min}$, $V_{y\_max}$, $V_{y\_min}$ et reconstituer ensuite le déplacement de la cible et son sens.

La deuxième modulation peut être émise soit continûment, soit de façon intermittente, au début ou au cours de l'acquisition. Pour déterminer le déplacement réel de la cible, il suffit de soustraire le déplacement artificiel au déplacement mesuré.

Il est clair, au vu de la description, que la source lumineuse est unique et que la double modulation en fréquence (et par équivalence en longueur d'onde) du signal est appliquée à la source lumineuse et que le faisceau lumineux émis par ladite source lumineuse est modulé doublement avant son introduction dans une fibre optique placée en regard de la source lumineuse, et donc avant son introduction dans la fibre de mesure.

La source lumineuse émet le faisceau lumineux modulé qui est guidé en direction de la cible, à travers la fibre de mesure jusqu'à son extrémité libre, qui en réfléchit une fraction, dite faisceau de référence. La fraction restante du faisceau lumineux, dite faisceau de mesure, se propage dans la cavité optique Fabry-Pérot vers la cible. Le faisceau de mesure est réfléchi par la cible et est réinjecté, en tout ou partie, dans la fibre de mesure produisant avec le faisceau de référence des interférences dans la fibre de mesure.

Lorsque la double modulation est appliquée directement à la source lumineuse pour permettre au dispositif de mesurer un paramètre physique et son sens quelque soit son amplitude de variation, il n'y a ainsi pas lieu d'utiliser de composants optiques (tels que par exemple un modulateur acousto-optique ou électro-optique) et/ou mécaniques (tels que par exemple un transducteur piézo-électrique) supplémentaires. Le dispositif de mesure gagne ainsi en coût, en encombrement, en robustesse (pas de composants fragiles et encore moins d'isolation thermo-mécanique de ces composants) et en simplicité de réalisation.

Avantageusement, la double modulation permet la mesure de toutes les amplitudes de variation du paramètre physique, qu'elles soient supérieures ou inférieures à la demi-longueur d'onde de la source lumineuse.

En particulier, la deuxième modulation, qui peut être appliquée à la source lumineuse de façon intermittente ou en continue, permet de s'affranchir des variations de puissance dues à la variation de la puissance de la source lumineuse et/ou des variations de puissance dues au vieillissement des composants utilisés, tels que par exemple la source lumineuse, les fibres optiques, les connectiques, les optiques (lentille de collimation), la dégradation de l'état de surface de la cible, variations qui ont une fréquence très inférieure à la fréquence de la deuxième modulation, de l'ordre généralement inférieure à l'hertz. Ainsi, une détection adaptée des paramètres précédemment décrits ($V_{x\_max}$, $V_{y\_max}$, $V_{x\_min}$, $V_{y\_min}$) peut être effectuée, assurant par là-même une démodulation plus précise dans le temps.

De préférence, la source lumineuse est une diode laser, par exemple de type DBR (acronyme de « Distributed Bragg Reflector ») ou DFB (acronyme de « Distributed FeedBack »), mais l'utilisation de tout autre type de source lumineuse, telle que par exemple une diode superluminescente ou une autre source laser telle que par exemple un laser accordable, est possible.

Par source laser, on entend de manière non équivoque une source comportant un amplificateur optique associé à une cavité optique, appelée résonateur. Le laser est basé sur le principe de l'émission stimulée. Le faisceau en sortie d'une source laser est un faisceau cohérent.

Lorsque le trajet optique parcouru par le faisceau de mesure dans la cavité optique Fabry-Pérot varie, les faisceaux de référence et de mesure interfèrent, générant un signal interférométrique multiplexé représentatif d'une variation d'intensité optique due au déplacement de la cible.

Le moyen de détection, préférentiellement un photo-détecteur, détecte la variation d'intensité optique et la convertit en un signal modulé électriquement, fonction du déplacement de la cible. Ce signal converti peut être par exemple, un signal de tension.

Les moyens de calcul acquièrent ensuite le signal mesuré par le moyen de détection et le signal de modulation haute fréquence de la source lumineuse généré par les moyens de modulation pour les traiter afin d'obtenir la mesure du paramètre physique avec son sens.

Les moyens de calcul comportent :

- des moyens de démultiplexage du signal mesuré par le moyen de détection, par synchronisation avec la première modulation pour obtenir les deux signaux démultiplexés $V_x$ et $V_y$,
- des moyens de compensation d'amplitude des signaux démultiplexés $V_x$ et $V_y$,
- des moyens de démodulation des signaux obtenus en sortie des moyens de compensation,
- des moyens de conversion du signal obtenu en sortie des moyens de démodulation pour obtenir le paramètre physique et son sens quelque soit les variations d'amplitude du paramètre physique.

Dans un mode préféré de réalisation, le dispositif à fibre optique extrinsèque permet la mesure d'un déplacement d'une cible selon un axe XX'. Ledit dispositif de mesure comporte :

- une source lumineuse, de longueur d'onde centrale λ,
- une fibre optique,
- un moyen de détection d'un signal interférométrique, ledit signal interférométrique comportant l'information sur le déplacement à déterminer,
- des moyens de modulation d'un signal émis par la source lumineuse,
- des moyens de calcul du déplacement à partir du signal interférométrique mesuré par le moyen de détection.

De préférence, la source lumineuse consiste en une source laser.

Dans un exemple de réalisation, la source laser est une diode laser.

Le signal modulé de la source lumineuse comporte une composante alternative comprenant une double modulation en fréquence, équivalent à une double modulation en longueur d'onde, générée par les moyens de modulation. La double modulation du signal est appliquée avantageusement à de la source lumineuse.

L'invention est également relative à un système pour la mesure conjointe de N paramètres physiques ou d'un paramètre physique N fois, N supérieur ou égal à 2. Le système de mesure comporte :

- une source lumineuse, de longueur d'onde centrale λ,
- N fibres optiques,
- N moyens de détection de signaux interférométriques, chaque signal interférométrique comportant l'information sur un paramètre physique à déterminer,
- des moyens de modulation d'un signal émis par la source lumineuse,
- des moyens de calcul des paramètres physiques à partir des signaux interférométriques mesurés par les N moyens de détection.

Le faisceau issu de la source lumineuse est scindé en N faisceaux, et chaque faisceau se propage vers une fibre de mesure et une cavité optique Fabry-Pérot, dont une des parois est formée par une extrémité de la fibre de mesure.

Le signal modulé de la source lumineuse comporte une composante alternative comprenant une double modulation en fréquence, équivalente à une double modulation en longueur d'onde, générée par les moyens de modulation. La double modulation du signal est appliquée avantageusement à de la source lumineuse.

Dans ce système, avantageusement, la source lumineuse et les moyens de modulation sont uniques et communs à la mesure de N paramètres physiques ou du paramètre physique N fois.

Ce système de mesure est formé par N cavités optiques positionnées selon N axes sensiblement parallèles ou différents pour la mesure conjointe d'un ou de N paramètres physiques.

Les caractéristiques et avantages de l'invention seront mieux appréciés grâce à la description qui suit, description qui expose les caractéristiques de l'invention au travers d'un exemple non limitatif d'application.

La description s'appuie sur les figures annexées qui représentent :

Figure 1a, déjà citée, illustre un schéma de principe d'un dispositif de mesure de déplacement d'une cible selon l'art antérieur,

Figure 1b, déjà citée, illustre un agrandissement de la cavité Fabry-Pérot de la figure 1a,

Figure 2, illustre un schéma de principe du dispositif de mesure à fibre optique extrinsèque dans un premier mode de réalisation de l'invention,

Figure 3a, illustre un signal multiplexé détecté par un moyen de détection dans un exemple de réalisation d'une cible se déplaçant avec une amplitude de variation supérieure à la demi-longueur d'onde de la source lumineuse,

Figure 3b illustre la première modulation, haute fréquence, d'un signal modulé en courant de la source lumineuse,

Figure 3c, illustre le signal démultiplexé $V_x$, après traitement par les moyens de démultiplexage et de compensation du signal détecté par un moyen de détection,

Figure 3d, illustre le signal démultiplexé $V_y$, après traitement par les moyens de démultiplexage et de compensation du signal détecté par un moyen de détection,

Figure 3e, illustre le signal de déplacement reconstitué de la cible à partir du dispositif selon le premier mode de réalisation de l'invention,

Figure 3f, illustre le déplacement de référence de la cible,

Figures 4a à 4f, illustrent des agrandissements d'une zone d'acquisition des figures 3a à 3f, respectivement,

Figure 5, illustre un diagramme en phase de Lissajous des signaux $V_x$ et $V_y$ des figures 3c et 3d,

Figure 6a, illustre le signal démultiplexé $V_x$, après traitement par les moyens de démultiplexage et de compensation du signal détecté par un moyen de détection, dans un exemple de réalisation d'une cible se déplaçant avec une amplitude de variation inférieure à la demi-longueur d'onde de la source lumineuse,

Figure 6b, illustre le signal démultiplexé $V_y$, après traitement par les moyens de démultiplexage et de compensation du signal détecté par un moyen de détection, dans le même exemple de réalisation que celui de la figure 6a,

Figure 6c, illustre le signal de déplacement reconstitué de la cible à partir du dispositif selon le premier mode de réalisation de l'invention, dans le même exemple de réalisation que celui de la figure 6a,

Figures 7a à 7c, illustrent des agrandissements d'une zone d'acquisition des figures 6a à 6c, respectivement,

Figure 8, illustre un diagramme en phase de Lissajous des signaux $V_x$ et $V_y$ des figures 6a et 6b,

Figure 9, illustre un schéma de principe du dispositif de mesure à fibre optique extrinsèque selon un autre mode de réalisation de l'invention.

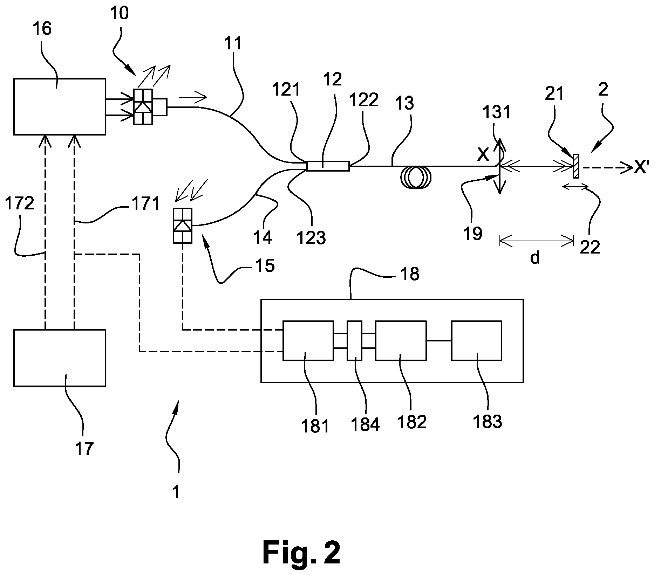

La figure 2 illustre schématiquement un dispositif à fibre optique extrinsèque 1 pour la mesure d'un déplacement d'une cible 2 selon un mode particulier de réalisation de l'invention.

L'exemple de réalisation du dispositif de mesure est décrit de manière détaillée dans son application au cas de la mesure de déplacement d'une cible 2. Ce choix n'est pas limitatif et l'invention s'applique également à d'autres paramètres physiques, tels que par exemple une variation de l'indice de réfraction optique du milieu, dans lequel se trouve la cible.

La description ci après décrit plus particulièrement les caractéristiques physiques, de fonctionnement et d'agencement des moyens du dispositif selon l'invention permettant de mesurer le cas particulier du déplacement d'une cible 2 dans l'air.

Le dispositif à fibre optique extrinsèque 1 selon l'invention comporte, comme illustré sur la figure 2 :

- une source lumineuse 10, pour émettre un faisceau lumineux,
- un générateur de courant 16 pour piloter la source lumineuse 10,
- une première fibre optique 11, en sortie de la source lumineuse 10, pour transporter et guider le faisceau lumineux,
- un coupleur 12 à fibres optiques, à trois voies, pourvu :

  ∘ d'un port 121 d'entrée de la première fibre optique,
  ∘ d'un premier port 122 de sortie d'une deuxième fibre optique, dite fibre de mesure 13,
  ∘ d'un deuxième port 123 de sortie d'une troisième fibre optique 14,

- un moyen de détection 15, relié à la troisième fibre optique 14,
- des moyens de modulation 17 reliés et associés au générateur de courant 16 de la source lumineuse 10,
- des moyens de calcul 18 du déplacement de la cible 2.

Une extrémité de la fibre de mesure, dite extrémité libre 131, est en vis-à-vis de la cible 2 dont on cherche à mesurer le déplacement. L'extrémité libre 131 de la fibre de mesure 13 est sensiblement perpendiculaire à un axe optique XX' et est placée à une distance d de la cible 2. L'extrémité libre 131 et la cible 2 forment une cavité Fabry-Pérot.

La source lumineuse 10, unique comme illustré sur la figure 2, est adaptée pour émettre un faisceau optique de longueur d'onde centrale λ.

De préférence, la source lumineuse 10 est une diode laser, type DFB.

La diode laser 10 est pilotée par le générateur de courant 16 et alimentée par un courant continu au cours du temps. La diode laser 10 est préférentiellement stabilisée en courant.

Dans un mode de réalisation de l'invention, la diode laser 10 est stabilisée en température au moyen d'un système d'asservissement connu en tant que tel. Ainsi pour une température donnée, la longueur d'onde est sensiblement proportionnelle au courant de la diode laser.

Une composante alternative, générée par les moyens de modulation 17, est ensuite superposée sur le courant continu de la diode laser 10 pour moduler la diode laser.

Les moyens de modulation 17 comportent :

- un premier moyen de modulation apte à générer une première modulation 171, haute fréquence et faible amplitude de modulation, du courant de la diode laser 10,
- un deuxième moyen de modulation apte à générer une deuxième modulation 172, basse fréquence et forte amplitude de modulation, du courant de la diode laser 10.

Le faisceau émis en sortie de la diode laser 10, avant introduction dans la fibre optique 11, est un faisceau modulé en longueur d'onde. Cependant, la modulation du signal en courant de la diode laser s'accompagne également d'une variation de la puissance de ladite diode laser, qui entraîne une variation de l'amplitude du courant détectée par le moyen de détection, variation parasite dont on s'affranchit par des moyens de compensation contenus dans les moyens de calcul 18.

Le recours à une double modulation du faisceau de la diode laser va permettre d'obtenir l'information sur le déplacement de la cible ainsi que son sens, quelque soit l'amplitude du déplacement, qu'elle soit supérieure ou inférieure à la demi-longueur d'onde de la diode laser.

Le choix des fréquences et amplitudes de chaque modulation est donc essentiel.

a) choix de la fréquence et de l'amplitude en courant de la première modulation :

Pour obtenir les signaux $V_x$ et $V_y$, et en déduire une information sur le déplacement de la cible et son sens, une technique de modulation développée dans l'invention consiste à moduler la longueur d'onde de la source laser à deux longueurs d'onde $\lambda_1$ à $\lambda_2$ autour de la longueur d'onde centrale $\lambda$ sous l'action d'une modulation de courant de faible amplitude à fréquence élevée.

Choix de la fréquence :

Le choix de la fréquence résulte d'un compromis. D'un côté, la fréquence est préférentiellement la plus haute possible, d'une part afin de pouvoir mesurer des déplacements rapides de la cible et d'autre part afin de réaliser un démultiplexage (temporel) le plus correct possible. D'un autre côté, il doit être tenu compte du temps de réponse spectrale de la diode laser.

Le choix de la fréquence est donc limité technologiquement par le temps de réponse spectrale de la diode laser, généralement quelques dizaines de microsecondes.

Dans un exemple de réalisation, pour une diode laser DFB de type ML1354 de Modulight®, la fréquence peut être de l'ordre de 25 kHz.

Choix de l'amplitude en courant de modulation :

L'amplitude de cette modulation doit être ajustée de manière à obtenir une condition de quadrature de phase. Des techniques de démodulation de deux signaux en quadrature de phase de type connues en soi sont ensuite utilisables pour lever l'ambiguïté de sens de déplacement de la cible.

Détermination de la condition de quadrature :

Les deux signaux $V_x$ et $V_y$ sont multiplexés temporellement dans le signal mesuré par le moyen de détection.

En partant de l'hypothèse que les signaux recherchés $V_x$ et $V_y$, une fois démultiplexés, et correspondant respectivement à $\lambda_1$ et $\lambda_2$ s'écrivent :

$$V_x = V_{0x} + V_{mx} \cos(\theta_1) \qquad (7a)$$

$$V_y = V_{0y} + V_{my} \cos(\theta_2) \qquad (7b)$$

avec :

$$\theta_1 = \frac{4\pi n}{\lambda_1} d \qquad (8a)$$

et

$$\theta_2 = \frac{4\pi n}{\lambda_2} d \qquad (8b)$$

$\theta_2$-$\theta_1$ est donc donné par :

$$\theta_2 - \theta_1 = 4\pi n d \left( \frac{\lambda_1 - \lambda_2}{\lambda_1 \lambda_2} \right) \qquad (9)$$

Si on considère que $\Delta\lambda=\lambda_2-\lambda_1$ est très petit devant la longueur d'onde centrale émise $\lambda$, il est possible d'approximer $\lambda_1\lambda_2 \approx \lambda^2$.

Ainsi, pour obtenir la condition de quadrature, il faut que :

$$\theta_2 - \theta_1 = \frac{\pi}{2} \qquad\qquad (10)$$

soit :

$$4\pi nd\left(\frac{\Delta\lambda}{\lambda^2}\right) = \frac{\pi}{2} \qquad\qquad (11)$$

La condition de quadrature est donc donnée par :

$$\frac{\Delta\lambda}{\lambda^2} = \frac{1}{8nd} \qquad\qquad (12)$$

Pour une température donnée, la longueur d'onde étant sensiblement proportionnelle au courant de la diode laser, il est ainsi possible d'en déduire l'amplitude en courant de modulation.

b) choix de la fréquence et de l'amplitude en courant de la deuxième modulation :

Pour surmonter les limitations mentionnées dans l'état de l'art, c'est-à-dire détecter une amplitude de déplacement de la cible inférieure à une demi-longueur d'onde de la diode laser, une technique de modulation développée dans l'invention consiste à moduler, à forte amplitude, le signal en courant de la diode laser à basse fréquence. Cette modulation provoque un déplacement artificiel d'amplitude supérieure à la demi-longueur d'onde de la diode laser qui permet de mesurer les extrema des signaux même pour des amplitudes de déplacement de la cible inférieures à une demi-longueur d'onde de la diode laser.

Choix de la fréquence :

La fréquence basse doit être préférentiellement très inférieure à la fréquence de la première modulation (haute fréquence). Une limite haute de la basse fréquence de modulation est, par exemple, au minimum 10 à 1000 fois plus faible que la fréquence de la première modulation, et de préférence, afin de pouvoir dissocier les deux fréquences, de l'ordre de mille fois plus faible. Une limite basse de la basse fréquence de modulation est par exemple une fréquence supérieure à des fréquences de variations de puissance dues à la variation de la puissance de la diode laser et/ou de variations de puissance dues au vieillissement des composants utilisés, tels que par exemple la diode laser, les fibres optiques, les connectiques, les optiques (lentille de collimation), la dégradation de l'état de surface de la cible. Cesdites variations ont une fréquence généralement très inférieure à l'hertz. Cette limite basse de la basse fréquence de modulation permet de la dissocier de ces fréquences de variations de puissance.

Le principal critère de sélection de la fréquence tient au fait qu'il est recherché une précision la plus importante possible sur les paramètres $V_{x\_max}$, $V_{x\_min}$, $V_{y\_max}$, $V_{y\_min}$ des signaux $V_x$, $V_y$. Cette basse fréquence dépend ainsi essentiellement des conditions de mesure suivant l'application ciblée ainsi que des variations de puissance citées précédemment.

Dans un mode de réalisation, la fréquence est de l'ordre de 1 Hz.

Choix de l'amplitude en courant de modulation :

Ainsi, pour générer ce déplacement artificiel, l'amplitude en courant de modulation basse fréquence doit remplir la condition suivante, pour une distance $d$ de la cible :

$$\theta_2 - \theta_1 \geq 2\pi \qquad\qquad (13)$$

soit :

$$4\pi n d\left(\frac{\Delta\lambda}{\lambda^2}\right) \geq 2\pi \qquad (14)$$

La condition sur la variation de longueur d'onde est donc donnée par :

$$\frac{\Delta\lambda}{\lambda^2} \geq \frac{1}{2nd} \qquad (15)$$

Pour une température donnée, la longueur d'onde étant sensiblement proportionnelle au courant de la diode laser, il est ainsi possible d'en déduire l'amplitude en courant de modulation.

Dans un exemple de réalisation proposé, la première modulation (haute fréquence) est une modulation rectangulaire, et la deuxième modulation (basse fréquence) est une modulation triangulaire. Mais d'autres formes de modulations peuvent être utilisées. Ainsi, la modulation haute fréquence peut également être une modulation sinusoïdale ou triangulaire, et la modulation basse fréquence peut être une modulation sinusoïdale.

Les moyens de modulation 17 sont connus en tant que tels et ne seront pas décrits.

Les fibres optiques 11, 13, 14 sont préférentiellement monomode à la longueur d'onde de la diode laser.

Les fibres optiques 11, 13, 14, le coupleur 12 et tous les moyens de liaison (connectiques) des différents éléments entre eux, sont de type standard et ne seront pas décrits ici.

Un collimateur 19 est interposé entre l'extrémité de la fibre et la cible.

De préférence, le collimateur 19 est utilisé pour la mesure de déplacement de cible située à des distances $d$ supérieures à quelques millimètres. Il n'est pas nécessaire pour des distances $d$ inférieures à quelques millimètres.

Le collimateur 19, de préférence traité anti-reflet, est choisi d'une part de sorte à recevoir un faisceau provenant de la fibre de mesure 13 et à collimater ledit faisceau en direction de la cible 2 et d'autre part pour recevoir une fraction du faisceau réfléchi par la cible et pour le focaliser vers la fibre de mesure 13.

Dans un exemple préféré de collimateur, ledit collimateur est un doublet de lentilles.

Dans un autre exemple, l'extrémité de la fibre 131 est une lentille et fait office de collimateur.

La cible 2 est en mouvement, comme indiqué schématiquement à titre d'exemple par la flèche 22, selon l'axe optique XX'.

Le dispositif de mesure 1 selon l'invention est donc adapté à mesurer la projection du déplacement de la cible le long de la direction de l'axe optique XX'.

La cible 2 est adaptée pour recevoir au moins une partie du faisceau lumineux issu de la fibre de mesure 13 et présente une surface 21 pour réfléchir ledit faisceau lumineux.

De préférence, la surface 21 de la cible 2 est sensiblement plane et sensiblement perpendiculaire à l'axe optique XX' afin d'obtenir la meilleure précision possible. Cependant, une surface plane et une perpendicularité par rapport à l'axe optique ne sont pas essentielles pour obtenir une mesure de déplacement de la cible suivant l'invention. D'autres formes de surface peuvent être utilisées dès lors qu'elles réfléchissent au moins une partie du faisceau de mesure vers la fibre de mesure.

En cas de non perpendicularité du déplacement, la mesure du déplacement de la cible se fera suivant la projection selon l'axe optique XX'.

Dans un exemple de réalisation, la cible 2 peut être une partie d'un objet pour lequel le déplacement doit être mesuré.

Alternativement, la cible 2 peut être séparée de l'objet mais attachée à l'objet, de sorte que la mesure de déplacement de la cible soit équivalente à la mesure du déplacement de l'objet.

Lorsque la cible 2 est en déplacement selon l'axe optique XX', un trajet optique parcouru par le faisceau issu de la diode laser varie, les faisceaux dits d'une part de référence (fraction du faisceau réfléchie à l'extrémité de la fibre) et d'autre part de mesure (fraction du faisceau réfléchie sur la cible) interfèrent, générant un signal interférométrique multiplexé représentatif d'une variation d'intensité optique due au déplacement de la cible.

Le moyen de mesure 15 détecte la variation d'intensité optique qui est ensuite convertie en un signal modulé électriquement, fonction du déplacement de la cible. Ce signal peut être par exemple, un signal de tension.

Le moyen de mesure 15 est de préférence un photo-détecteur.

Des moyens de calcul 18 acquièrent ensuite le signal mesuré par le photo-détecteur 15 et le signal de modulation de la diode laser 10 généré par les moyens de modulation 17 pour les traiter afin d'obtenir une mesure de déplacement.

Les moyens de calcul 18 comportent :

- des moyens de démultiplexage 181 du signal détecté par le photo-détecteur 15 pour obtenir les deux signaux $V_x$ et $V_y$,
- des moyens de compensation 184 d'amplitude des signaux $V_x$ et $V_y$,
- des moyens de démodulation 182 pour obtenir le déphasage $\theta$,
- des moyens de conversion 183 pour reconstituer le déplacement.

Les moyens de démultiplexage 181 sont connus en tant que tels et ne seront pas décrits. Ils permettent d'obtenir les deux signaux $V_x$ et $V_y$, par synchronisation avec la haute fréquence de la première modulation 171.

Les moyens de compensation 184 permettent de compenser une variation d'amplitude parasite due à la variation de puissance lors de la modulation du signal en courant de la diode laser.

Le déphasage $\theta$ est ensuite calculé par les moyens de démodulation 182 à partir des deux signaux $V_x$ et $V_y$ compensés en amplitude.

Dans un exemple de réalisation, les moyens de démodulation 182 utilisent une méthode de démodulation arc tangente pour reconstituer le déplacement de la cible 2 et son sens.

Les deux signaux $V_x$ et $V_y$ compensés en amplitude s'écrivent :

$$V_x = V_{0x} + V_{mx}\cos(\theta) \tag{16a}$$

$$V_y = V_{0y} + V_{my}\sin(\theta) \tag{16b}$$

Si on pose :

$$B_x = \cos(\theta) = \frac{V_x - V_{0x}}{V_{mx}} \qquad \in [-1, +1] \tag{17a}$$

$$B_y = \sin(\theta) = \frac{V_y - V_{0y}}{V_{my}} \qquad \in [-1, +1] \tag{17b}$$

Alors $\theta$ est calculé par :

$$\theta = \pi + \arctan2\left(\frac{B_y}{B_x}\right) \quad \theta \in [0, 2\pi] \tag{18}$$

Les paramètres $V_{0x}$, $V_{mx}$, $V_{0y}$, $V_{my}$ sont calculés à partir des formules données par les relations (6a) à (6d). Il faut donc obtenir les paramètres $V_{x\_max}$, $V_{x\_min}$, $V_{y\_max}$, $V_{y\_min}$.

Dans le cas où l'amplitude de variation du paramètre physique est supérieure à la demi-longueur d'onde de la source lumineuse, le signal interférométrique détecté par le moyen de détection comporte au moins une frange d'interférence complète, ce qui permet de déterminer les paramètres $V_{x\_max}$, $V_{x\_min}$, $V_{y\_max}$, $V_{y\_min}$.

Dans le cas où l'amplitude de variation du paramètre physique est inférieure à la demi-longueur d'onde de la source lumineuse, le signal interférométrique détecté par le moyen de détection ne comporte pas une frange d'interférence complète. Les paramètres $V_{x\_max}$, $V_{x\_min}$, $V_{y\_max}$, $V_{y\_min}$ ne sont pas mesurables directement. La deuxième modulation (basse fréquence) du signal modulé va permettre de créer au moins une frange d'interférence complète artificielle pour obtenir des paramètres $V_{x\_max}$, $V_{x\_min}$, $V_{y\_max}$, $V_{y\_min}$.

La deuxième modulation peut être émise soit continûment, soit de façon intermittente, au début ou au cours de l'acquisition. Pour déterminer le déplacement réel de la cible, il suffit de soustraire le déplacement artificiel au déplacement mesuré.

Le déplacement de la cible 2 et son sens sont ensuite calculés par des moyens de conversion 183.

Dans un exemple de réalisation, les moyens de conversion 183 utilisent une méthode incrémentale, appelée démodulation à poursuite de phase (« Phase-tracking démodulation », en terme anglo-saxon), pour reconstruire le déplacement de la cible à partir du déphasage $\theta$ calculé par les moyens de démodulation.

Ainsi, si $\theta_n$ représente le déphasage mesuré à l'étape $n$ et $\theta_{n-1}$ celui mesuré à l'étape $n-1$, le déplacement incrémental correspondant reconstitué est donné par la relation :

$$d_n = d_{n-1} + \frac{\theta_n - \theta_{n-1}}{4\pi\, n}\lambda = d_{n-1} + \frac{\Delta}{\delta} \qquad (19)$$

où $\Delta = (\theta_n - \theta_{n-1})$ et $\delta = (4\pi n/\lambda)$.

Remarquons que la relation (19) ci-dessus permet de calculer uniquement un déplacement relatif avec $\theta_0 = 0$ et $d_0 = 0$.

Exemple :

Afin d'illustrer le déplacement reconstitué de la cible 2 à partir du dispositif de mesure 1 selon l'invention, un exemple illustre la reconstitution du déplacement d'une cible d'amplitude supérieure à la demi-longueur d'onde de la diode laser et un autre exemple illustre le déplacement d'une cible d'amplitude inférieure à la demi-longueur d'onde de la diode laser.

Pour ces deux exemples :

- la source lumineuse laser 10 est une diode laser DFB de type ML1354 de Modulight® émettant à une longueur d'onde centrale $\lambda$ de 1310 nm. La diode laser est alimentée par un courant d'injection de 30 mA, et a une puissance de sortie maximale de 6 mW,
- les fibres 11, 13, 14 sont des fibres de type SMF-28 de Corning®,
- le coupleur optique 12 est un coupleur 1*2 SMF 28 de China Daheng Group,
- la cible 2 est positionnée à une distance de 50 mm de l'extrémité de la fibre de mesure 13, et le déplacement de celle-ci est généré par un transducteur piézoélectrique de type P-753.2CD de Physik Instrumente® (PI). Ce transducteur piézoélectrique est couplé à un capteur capacitif pour mesurer directement le déplacement du transducteur piézoélectrique, avec une précision de 2 nm en statique.

La première modulation (haute fréquence) est une modulation rectangulaire de fréquence 25 kHz.

La deuxième modulation (basse fréquence) est une modulation triangulaire de fréquence 1,2 Hz.

La réponse spectrale de la source laser par rapport au courant injecté est mesurée à ~9.2 pm/mA. L'amplitude de la première modulation nécessaire pour obtenir la quadrature de phase est de $\Delta I$ ~0.466 mA (d'où un équivalent à $\Delta\lambda = 4.29$ pm) pour une distance fibre de mesure-cible $d = 50$ mm et un milieu d'indice $n = 1$, l'air.

Exemple 1 : Déplacement d'une cible d'amplitude supérieure à la demi-longueur d'onde de la diode laser

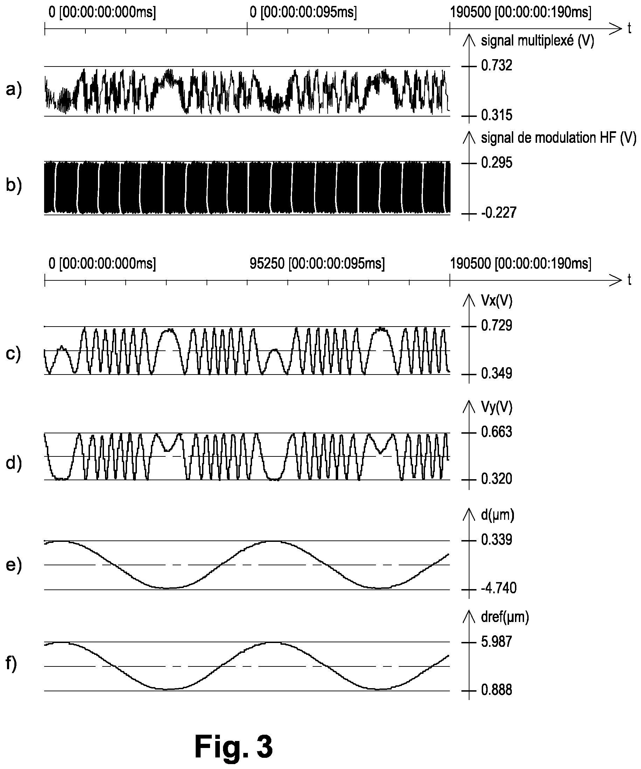

Les résultats sont présentés sur les figures 3a à 3f. Les signaux sont représentés sur une plage de mesure de 190 ms.

La figure 3a représente le signal multiplexé détecté par le photo-détecteur.

La figure 3b représente le signal représentatif de la première modulation (haute fréquence) de la diode laser.

La figure 3c représente le signal démultiplexé $V_x$, après traitement par les moyens de démultiplexage et de compensation du signal détecté par le photo-détecteur.

La figure 3d représente le signal démultiplexé $V_y$, après traitement par les moyens de démultiplexage et de compensation du signal détecté par le photo-détecteur.

La figure 3e représente le signal de déplacement reconstitué de la cible.

La figure 3f représente le signal de référence du déplacement de la cible.

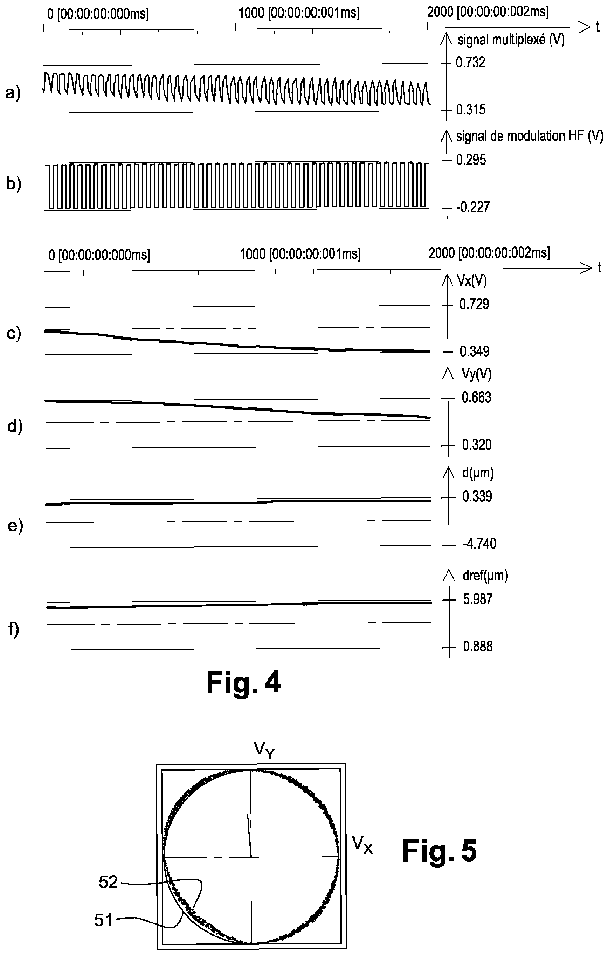

Les figures 4a à 4f sont des agrandissements d'une zone de la plage de mesure des figures 3a à 3f respectivement. Les signaux sont représentés sur une plage de mesure de 2 ms.

On constate que le signal de déplacement reconstitué de la cible est très proche du signal de référence.

La figure 5 est une figure de Lissajous représentant les signaux $V_x$-$V_y$ des figures 3c et 3d. Cette figure permet d'illustrer le déplacement de la cible. En effet, lorsque le déplacement de la cible a une amplitude équivalente à la demi-longueur d'onde de la diode laser, sa représentation sur un diagramme $V_y$-$V_x$ de Lissajous est illustrée par la trace 51 et équivaut à un cercle complet. La trace 52 est représentative de l'amplitude du déplacement de la cible. On constate que cette trace 52 représente au moins un tour de cercle. L'amplitude du déplacement de la cible est donc supérieure ou égale à la demi-longueur d'onde de la diode laser.

Exemple 2 : Déplacement d'une cible d'amplitude inférieure à la demi-longueur d'onde de la diode laser

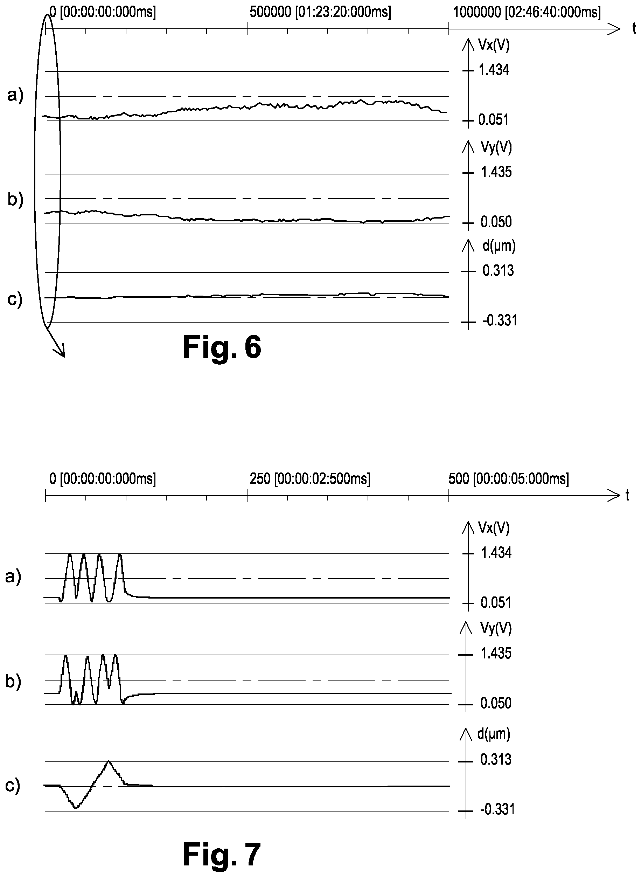

Les résultats sont présentés sur les figures 6a à 6c. Les signaux sont représentés sur une plage de mesure de 2h46mn40s.

La figure 6a représente le signal démultiplexé $V_x$, après traitement par les moyens de démultiplexage et de compensation du signal détecté par le photo-détecteur.

La figure 6b représente le signal démultiplexé $V_y$, après traitement par les moyens de démultiplexage et de compensation du signal détecté par le photo-détecteur.

La figure 6c représente le signal de déplacement reconstitué de la cible.

Les figures 7a à 7c sont des agrandissements d'une zone de la plage de mesure des figures 6a à 6c respectivement. Les signaux sont représentés sur une plage de mesure de 5 s.

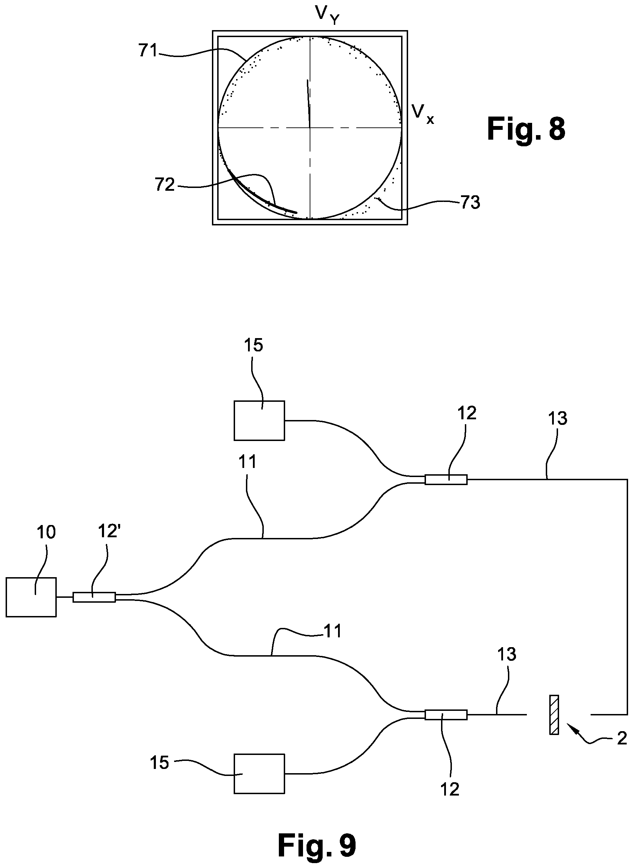

La figure 8 est une figure de Lissajous représentant les signaux $V_x$ et $V_y$ des figures 6a et 6b. Cette figure fait apparaître clairement le faible déplacement de la cible. En effet, lorsque le déplacement de la cible a une amplitude équivalente à la demi-longueur d'onde de la diode laser, sa représentation sur un diagramme $V_y$-$V_x$ de Lissajous est illustrée par la trace 71 et équivaut à un cercle complet. La trace 72 est représentative de l'amplitude du déplacement de la cible. On constate que cette trace 72 ne représente même pas un quart de cercle. L'amplitude du déplacement de la cible est donc inférieure à la demi-longueur d'onde de la diode laser. La trace 73 représentée par des traits pointillés discontinus est représentative du déplacement artificiel créé par la deuxième modulation (basse fréquence) afin de déterminer les paramètres $V_{x\_max}$, $V_{x\_min}$, $V_{y\_max}$, $V_{y\_min}$.

Ces deux exemples permettent de montrer que le dispositif de mesure suivant l'invention permet de reconstituer le déplacement d'une cible et son sens quelque soit l'amplitude du déplacement.

Dans une variante de réalisation, il est possible d'envisager un système de mesure formé par N cavités optiques positionnées selon N axes sensiblement parallèles ou différents pour la mesure conjointe de déplacement d'une même cible ou de N cibles.

Ce système a pour base commune la diode laser 10 et les moyens de modulation 17.

Le faisceau issu de la diode laser commune 10 est scindé, via un coupleur 12' 1*N voies, en N faisceaux, chaque faisceau se propageant, via une fibre 11, vers un coupleur 12 puis vers une fibre de mesure 13 et une cavité optique Fabry-Pérot. Un signal interférométrique généré par le déplacement d'une cible d'une cavité optique est détecté par un photo-détecteur 15. Les signaux mesurés par chaque photo-détecteur 15 sont acquis par des moyens de calculs 18 qui, après traitement, reconstituent le ou les déplacements recherchés d'une ou des cibles pour chaque cavité optique Fabry-Pérot.

Dans un premier mode de réalisation du système, la cible 2 est différente pour chaque cavité optique Fabry-Pérot.

Les N cavités optiques Fabry-Pérot sont positionnées soit selon des axes différents, soit selon des axes sensiblement parallèles.

Dans un autre mode de réalisation du système, la cible 2 est commune à toutes les N cavités optiques Fabry-Pérot. Ce mode permet une mesure redondante des déplacements de la cible.

Les N cavités optiques Fabry-Pérot sont positionnées soit selon des axes différents pour la mesure conjointe de déplacement transverse d'une cible, soit selon des axes sensiblement parallèles.

Dans un exemple particulier, comme illustré sur la figure 9, où le système comporte deux cavités optiques Fabry-Pérot, lesdites cavités optiques Fabry-Pérot sont positionnées selon le même axe, de part et d'autre de la cible 2. Ce système permet la mesure différentielle du déplacement de ladite cible. Ce système présente également l'avantage de compenser de faibles variations de longueur d'onde de la diode laser.

**Revendications**

1. Dispositif (1) à fibre optique extrinsèque pour la mesure d'un paramètre physique comportant :

   - une source lumineuse (10), de longueur d'onde centrale $\lambda$, pour générer un faisceau lumineux en direction d'une cible,
   - une fibre optique (13), dite fibre de mesure, pour transporter et guider le faisceau lumineux vers une cible, une extrémité de ladite fibre optique, placée en regard de la cible, formant avec la cible une cavité optique,
   - un moyen de détection (15) d'un signal interférométrique, ledit signal interférométrique comportant l'information sur le paramètre physique à déterminer, et étant généré par une interférence entre un faisceau lumineux de référence et un faisceau de mesure, ledit faisceau lumineux de référence correspondant à une fraction du faisceau lumineux issu de la source lumineuse qui est réfléchie par l'extrémité de la fibre, et ledit faisceau lumineux de mesure correspondant à une fraction du faisceau lumineux issu de la source lumineuse qui est réfléchie par la cible et qui parcourt un trajet optique dans la cavité optique dont la variation est fonction du paramètre physique à déterminer,
   - des moyens de modulation (17) d'un signal émis par la source lumineuse,
   - des moyens de calcul (18) du paramètre physique à partir du signal interférométrique mesuré par le moyen de détection (15),

**caractérisé en ce que** la source lumineuse consiste en une source laser et **en ce que** le signal modulé en sortie de la source lumineuse (10) est un signal modulé en longueur d'onde et qu'il comporte une composante alternative comprenant une double modulation en fréquence générée par les moyens de modulation.

2. Dispositif (1) à fibre optique extrinsèque suivant la revendication 1 dans lequel la source laser est une diode laser.

3. Dispositif (1) à fibre optique extrinsèque suivant l'une des revendications précédentes dans lequel la double modulation consiste en une première modulation haute fréquence et en une deuxième modulation basse fréquence.

4. Dispositif (1) à fibre optique extrinsèque suivant la revendication 3 dans lequel la première modulation haute fréquence comporte une faible amplitude de modulation d'un courant de la source lumineuse.

5. Dispositif (1) à fibre optique extrinsèque suivant l'une des revendications 3 ou 4 dans lequel la deuxième modulation basse fréquence comporte une forte amplitude de modulation d'un courant de la source lumineuse.

6. Dispositif (1) à fibre optique extrinsèque suivant l'une des revendications précédentes dans lequel les moyens de calcul (18) comportent des moyens de démultiplexage (181) du signal mesuré par le moyen de détection et des moyens de compensation (184) d'amplitude des signaux démultiplexés issus des moyens de démultiplexage (181).

7. Dispositif (1) à fibre optique extrinsèque suivant la revendication 6 dans lequel les moyens de calcul (18) comportent des moyens de démodulation (182) des signaux obtenus en sortie des moyens de compensation (184) et des moyens de conversion (183) du signal obtenu en sortie des moyens de démodulation (182).

8. Utilisation du dispositif (1) à fibre optique extrinsèque suivant l'une des revendications 1 à 7 pour la mesure de déplacement de la cible.

9. Utilisation du dispositif (1) à fibre optique extrinsèque suivant l'une des revendications 1 à 7 pour la mesure d'une variation de l'indice de réfraction du milieu dans lequel se trouve la cible.

10. Système pour la mesure de N paramètres physiques comportant N dispositifs (1) à fibre optique extrinsèque suivant l'une des revendications 1 à 7, la source lumineuse (10) étant unique et commune, le faisceau issu de la source lumineuse étant scindé en N faisceaux et chaque faisceau se propageant vers une fibre de mesure (13) et une cavité optique de Fabry-Pérot, chaque signal interférométrique comportant l'information sur un paramètre physique à déterminer, les moyens de modulation (17) étant unique et commun.

**Patentansprüche**

1. Extrinsische faseroptische Vorrichtung (1) zum Messen eines physikalischen Parameters, umfassend:

- eine Lichtquelle (10) mit einer Mittenwellenlänge λ, um einen Lichtstrahl in Richtung eines Ziels zu erzeugen,
- eine als Messfaser bezeichnete optische Faser (13), um den Lichtstrahl zu einem Ziel zu transportieren und zu lenken, wobei ein Ende der optischen Faser, das dem Ziel zugewandt platziert ist, mit dem Ziel einen optischen Hohlraum bildet,
- ein Mittel zum Detektieren (15) eines interferometrischen Signals, wobei das interferometrische Signal die Information über den zu bestimmenden physikalischen Parameter umfasst und von einer Interferenz zwischen einem Referenzlichtstrahl und einem Messstrahl erzeugt wird, wobei der Referenzlichtstrahl einer Fraktion des aus der Lichtquelle stammenden Lichtstrahls entspricht, die vom Ende der Faser reflektiert wird, und wobei der Messlichtstrahl einer Fraktion des aus der Lichtquelle stammenden Lichtstrahls entspricht, die vom Ziel reflektiert wird und die im optischen Hohlraum einen optischen Pfad durchläuft, dessen Variation von dem zu bestimmenden physikalischen Parameter abhängig ist,
- Mittel zum Modulieren (17) eines von der Lichtquelle gesendeten Signals,
- Mittel zum Berechnen (18) des physikalischen Parameters auf Grundlage des vom Detektionsmittel (15) gemessenen interferometrischen Signals,

**dadurch gekennzeichnet, dass** die Lichtquelle in einer Laserquelle besteht, und dadurch, dass das am Ausgang der Lichtquelle (10) modulierte Signal ein wellenlängenmoduliertes Signal ist, und dass es eine alternative Komponente umfasst, die eine von den Modulationsmitteln erzeugte doppelte Frequenzmodulation umfasst.

2. Extrinsische faseroptische Vorrichtung (1) nach Anspruch 1, wobei die Laserquelle eine Laserdiode ist.

3. Extrinsische faseroptische Vorrichtung (1) nach einem der vorstehenden Ansprüche, wobei die doppelte Modulation in einer ersten hochfrequenten Modulation und in einer zweiten niederfrequenten Modulation besteht.

4. Extrinsische faseroptische Vorrichtung (1) nach Anspruch 3, wobei die erste hochfrequente Modulation eine geringe Modulationsamplitude eines Stroms der Lichtquelle umfasst.

5. Extrinsische faseroptische Vorrichtung (1) nach einem der Ansprüche 3 oder 4, wobei die zweite niederfrequente Modulation eine große Modulationsamplitude eines Stroms der Lichtquelle umfasst.

6. Extrinsische faseroptische Vorrichtung (1) nach einem der vorstehenden Ansprüche, wobei die Berechnungsmittel (18) Mittel zum Demultiplexen (181) des vom Detektionsmittel gemessenen Signals und Mittel Amplitudenkompensation (184) der aus den Demultiplexmitteln (181) stammenden gedemultiplexten Signale umfassen.

7. Extrinsische faseroptische Vorrichtung (1) nach Anspruch 6, wobei die Berechnungsmittel (18) Mittel zum Demodulieren (182) der am Ausgang der Kompensationsmittel (184) erhaltenen Signale, und Mittel zum Umwandeln (183) des am Ausgang der Demodulationsmittel (182) erhaltenen Signals umfassen.

8. Verwendung der extrinsischen faseroptischen Vorrichtung (1) nach einem der Ansprüche 1 bis 7 zum Messen einer Bewegung des Ziels.

9. Verwendung der extrinsischen faseroptischen Vorrichtung (1) nach einem der Ansprüche 1 bis 7 zum Messen einer Variation des Brechungsindex des Mediums, in dem sich das Ziel befindet.

10. System zum Messen von N physikalischen Parametern, das N extrinsische faseroptische Vorrichtungen (1) nach einem der Ansprüche 1 bis 7 umfasst, wobei die Lichtquelle (10) einzig und gemein ist, wobei der aus der Lichtquelle stammende Strahl in N Strahlen geteilt wird und wobei sich jeder Strahl zu einer Messfaser (13) und einem optischen Fabry-Pérot-Hohlraum ausbreitet, wobei jedes interferometrische Signal die Information über einen zu bestimmenden physikalischen Parameter umfasst, wobei die Modulationsmittel (17) einzig und gemein sind.

**Claims**

1. Extrinsic optical fiber device (1) for measuring a physical parameter, comprising:

   - a light source (10), of central wavelength $\lambda$, to generate a light beam in the direction of a target,
   - an optical fiber (13), called measurement fiber, to transport and guide the light beam towards a target, one extremity of said optical fiber, placed facing the target, forming with the target an optical cavity,
   - a means (15) for detecting an interferometric signal, said interferometric signal comprising the information about the physical parameter to be determined, and being generated by an interference between a reference light beam and a measurement beam, said reference light beam corresponding to a fraction of the light beam from the light source that is reflected by the extremity of the fiber, and said measurement light beam corresponding to a fraction of the light beam from the light source that is reflected by the target and travels an optical path in the optical cavity whose variation is a function of the physical parameter to be determined,
   - means (17) for modulating a signal emitted by the light source,
   - means (18) for calculating the physical parameter on the basis of the interferometric signal measured by the detection means (15),

   **characterized in that** the light source consists of a laser source and **in that** the modulated signal at the output of the light source (10) is a wavelength modulated signal and that it comprises an alternating component comprising a double frequency modulation generated by the modulation means.

2. Extrinsic optical fiber device (1) according to claim 1 wherein the laser source is a diode laser.

3. Extrinsic optical fiber device (1) according to one of the preceding claims wherein the double modulation consists of a first high-frequency modulation and a second low-frequency modulation.

4. Extrinsic optical fiber device (1) according to claim 3 wherein the first high frequency modulation comprises a low modulation amplitude of a current of the light source.

5. Extrinsic optical fiber device (1) according to one of claims 3 or 4 wherein the second low frequency modulation comprises a high modulation amplitude of a current of the light source.

6. Extrinsic optical fiber device (1) according to one of the preceding claims wherein the calculation means (18) comprise means for demultiplexing (181) the signal measured by the detection means and means for compensating (184) the amplitude of the demultiplexed signals coming from the demultiplexing means (181).

7. Extrinsic optical fiber device (1) according to claim 6 wherein the calculation means (18) comprise means for demodulating (182) signals obtained on output from the compensation means (184) and means for converting (183) the signal obtained on output from the demodulation means (182).

8. Use of the extrinsic optical fiber device (1) according to one of claims 1 to 7 for the measurement of the target displacement.

9. Use of the extrinsic optical fiber device (1) according to one of claims 1 to 7 for the measurement of a change in the refractive index of the medium in which the target is located.

10. System for measuring N physical parameters comprising N extrinsic optical fiber devices (1) according to one of claims 1 to 7, the light source (10) being unique and mutual, the beam from the light source being split into N beams and each beam propagating towards a measurement fiber (13) and a Fabry-Perot optical cavity, each interferometric signal comprising the information on a physical parameter to be determined, the modulation means (17) being unique and mutual.

**Fig. 1a**

**Fig. 1b**

**Fig. 2**

Fig. 3

0 [00:00:00:000ms]     1000 [00:00:00:001ms]     2000 [00:00:00:002ms]

t

signal multiplexé (V)

a)

0.732

0.315

signal de modulation HF (V)

b)

0.295

-0.227

0 [00:00:00:000ms]     1000 [00:00:00:001ms]     2000 [00:00:00:002ms]

t

Vx(V)

c)

0.729

0.349

Vy(V)

d)

0.663

0.320

d(µm)

e)

0.339

-4.740

dref(µm)

f)

5.987

0.888

# Fig. 4

$V_Y$

$V_X$ **Fig. 5**

52

51

**Fig. 6**

**Fig. 7**

**Fig. 8**

**Fig. 9**